# EUROPÄISCHE PATENTSCHRIFT

(11) **EP 2 138 735 B1**
(45) Veröffentlichungstag und Bekanntmachung des Hinweises auf die Patenterteilung: **27.08.2014**
(21) Anmeldenummer: 09007957.5
(22) Anmeldetag: 18.06.2009
(51) Int. Cl.: F16D 27/112, F16D 27/14

(54) **Reibschaltkupplung zur Drehmomentübertragung**
Friction coupling for transferring torque
Embrayage à friction destiné à la transmission de couple

(30) Priorität: 27.06.2008 DE 102008030165
(43) Veröffentlichungstag der Anmeldung: 30.12.2009
(73) Patentinhaber: LICOS Trucktec GmbH, 88677 Markdorf (DE)
(72) Erfinder: Geiger, Sigmund, 88677 Markdorf (DE)
(74) Vertreter: Otten, Roth, Dobler & Partner

(56) Entgegenhaltungen:
- AU-B2- 459 523
- DE-U- 7 105 355
- FR-A- 1 455 152
- US-A- 3 842 378
- US-A- 3 899 061
- US-A- 4 496 922

## Beschreibung

Die Erfindung betrifft eine Reibschaltkupplung für eine Drehmomentübertragung von einem Rotor auf ein anzutreibendes Element gemäß Anspruch 1.

### Stand der Technik

Es wurden bereits Versuche unternommen, elektromagnetisch betätigbare Kupplungen in Vorrichtungen zur Kühlung von Verbrennungsmaschinen, insbesondere in Fahrzeugen, im Hinblick auf einen Notbetrieb im Falle eines Funktionsausfalles eines Elektromagnetteils zu verbessern.

In derartigen Kupplungen werden z.B. Elektromagnetanordnungen eingesetzt, welche Permanentmagnete aufweisen, mit denen eine Reibschaltkupplung aktivierbar ist. Ein Beispiel für eine solche Kupplung ist in der Schrift US 3 842 378 A beschrieben. Darin weist eine Kupplungsanordnung eine Ankerscheibe auf, die von einem Permanentmagneten an eine erste Riemenscheibe und von einem Elektromagneten an eine zweite Riemenscheibe angezogen sein kann.

In den Schriften DE 71 05 355 U, US 3,899,061 A, AU 459 523 B2, und FR 1 455 152 A sind elektromagnetisch schaltbare Vorrichtungen zur Übertragung von Drehmomenten beschrieben, in denen Permanentmagnetmittel an eine Anordnung bzw. an eine Dimensionierung eines Elektromagneten angepasst sind. Durch Zuschalten des Elektromagnetteils kann die Wirkung der Permanentmagnete deaktiviert werden.

Bisher sind entsprechende Anordnungen nicht praxisgerecht, insbesondere können keine ausreichend hohen Drehmomente bereitgestellt werden.

### Aufgabe und Vorteile der Erfindung

Aufgabe der vorliegenden Erfindung ist es, Anordnungen der einleitend bezeichneten Art praxistauglich auszugestalten, insbesondere für den Einsatz im Fahrzeugbereich. Diese Aufgabe wird durch den Anspruch 1 gelöst. In den abhängigen Ansprüchen sind vorteilhafte Weiterbildungen der Erfindung definiert.

Die Erfindung geht aus von einer Reibschaltkupplung für eine Drehmomentübertragung von einem um eine Achse antreibbaren Rotor auf ein anzutreibendes Element, umfassend eine Reibscheibenkupplung mit einer Elektromagnetanordnung, die einen Spulenkörper und den Spulenkörper zumindest teilweise umgebende ferromagnetisch leitende Magnetleitmittel aufweist, welche einen zur Achse radial außen liegenden und einen radial innen liegenden axial ausgerichteten Stegabschnitt und benachbart.zu den Magnetleitmitteln vorhandene Permanentmagnetmittel umfassen, über welche ein axial bewegbarer Reibabschnitt der Reibscheibenkupplung magnetisch mit dem Rotor verbindbar ist, wobei im elektrisch geschalteten Zustand der Elektromagnetanordnung durch Schwächung der magnetischen Anziehwirkung der Permanentmagnetmittel die Anlage des Reibabschnitts am Rotor aufhebbar ist. Dabei sind die Permanentmagnetmittel derart ausgebildet sind, dass sich ein Anteil der Permanentmagnetmittel in radialer Richtung zur Achse weiter nach außen als der radial außen liegende Stegabschnitt erstreckt und/oder weiter nach innen als der radial innen liegende Stegabschnitt erstreckt.

Der Kern der Erfindung liegt darin, dass die Magnetleitmittel ein im Querschnitt T-förmiges Teil mit einem Mittelteil und ein abgewinkelt zum Mittelteil ausgerichtetes Querteil aufweisen, wobei der radial außenliegende Stegabschnitt mit dem Mittelteil gebildet ist. Mit dieser einfachen Anpassung eines Teils der Magnetleitmittel kann besonders kompakt die Reibschaltkupplung ausgebildet sein, wobei gleichzeitig die Permanentmagnetmittel vorteilhaft untergebracht werden können. Den Permanentmagnetmitteln steht mit dem Querteil eine im Einbauzustand radial und quer zur Achse ausgerichtete Ringfläche zur Verfügung, die entsprechend eine vergrößerte Einkoppelfläche für deren Magnetflusslinien bereitstellt. Die Erstreckung der Ringfläche am Querteil und damit die Anlagefläche für die Permanentmagnetmittel wird in zumindest einer radialer Richtung, also z.B. radial nach außen, insbesondere nicht durch einen axialen Stegabschnitt begrenzt.

Damit können die Permanentmagnetmittel, beispielsweise Dauermagnete, im Hinblick auf ihre Anordnung bzw. Ausgestaltung, z.B. maximal mögliche Abmessungen, verbessert werden. Damit lässt sich insbesondere eine mit den Permanentmagnetmitteln mögliche Anziehwirkung bzw. ein Maximalwert einer Drehmomentübertragung vom Rotor auf das anzutreibende Element erhöhen. Dies kann insbesondere ohne zusätzlich notwendigen Bauraum oder aufwändige Maßnahmen erreicht werden. Durch die vorgeschlagene geometrische Anpassung können mit den Permanentmagnetmitteln größere magnetisch wirksame Flächenbereiche bereitgestellt werden.
Denn es hat sich herausgestellt, dass die Permanentmagnetmittel durch das Überragen des spulenkörpers bzw. der umgebenden Stegabschnitte in radialer Richtung eine erhöhte magnetisch bewirkte Anziehkraft auf den Reibabschnitt erzielbar ist. Dabei kann der Reibabschnitt selbst im Wesentlichen in radialer Richtung nicht über den Spulenkörper bzw. die Stegabschnitte überstehen. Besonders vorteilhaft ist es, dass eine bestehende Reibschaltkupplung durch die erfindungsgemäße Maßnahme keinen erhöhten Bauraum benötigt bzw. außer den Magnetleitmitteln und den Permanentmagnetmitteln keine weiteren Elemente angepasst werden müssen.

Durch die gegenüber bisherigen Lösungsversuchen vergleichsweise größere Fläche der Permanentmagnetmittel können auch die damit erzielbaren Magnetkräfte erhöht werden, da die Magnetwirkung u.a. neben einer Volumen- und Materialabhängigkeit auch flächenabhängig ist. Mit der vorgeschlagenen Anordnung können die Permanentmagnetmittel durch den Flächeneffekt vergleichsweise dünner ausgebildet sein, um die gleiche Magnetkraft zu erzielen bzw. bei gleicher Dicke der Permanentmagnetmittel kann gegenüber bisherigen Anordnung eine höhere magnetische Anziehwirkung bzw. -kraft erzielt werden. Die zu beobachtende Magnetflussdichte in den Magnetleitmitteln wird entsprechend erhöht und damit verbunden ein höheres Drehmoment mit den Permanentmagnetmitteln übertragbar.

Es ist überdies vorteilhaft, dass die Magnetleitmittel ein im Querschnitt L-förmiges Teil mit zwei zueinander abgewinkelten Schenkeln aufweist, wobei der radial innen liegende Stegabschnitt mit einem der Schenkel gebildet ist. Damit kann der radial innere Stegabschnitt um den Spulenkörper einfach und Platz sparend realisiert werden. Das L-förmige und ggf. auch das T-förmige Teil kann beispielsweise aus einem Blechmaterial als Biegeteil bzw. Schweiß- oder Lötteil geformt sein.

Es ist außerdem vorteilhaft, dass ein Abschnitt des T-förmigen Teils und ein Abschnitt des L-förmigen Teils sich derart gegenüberliegen, dass entlang des Querteils ein radial ausgerichteter Spalt vorhanden ist, in dem die Permanentmagnetmittel angeordnet sind. Durch die Kombination der Teile mit im Querschnitt T-Form bzw. L-Form können die Magnetleitmittel durch entsprechende Positionierung der beiden Teile kompakt gestaltet werden. Auch kann eine gewünschte Spaltlänge in radialer Richtung und eine Spaltbreite in axialer Richtung ohne Weiteres eingestellt bzw. vorgegeben werden, was die Verwendung von unterschiedlichen Abmessungen der Permanentmagnetmittel ermöglicht. Denn die Permanentmagnetmittel werden in dem Spaltbereich insbesondere diesen ausfüllend eingebracht, was weiter unten noch erläutert wird. Die Permanentmagnetmittel sind beispielsweise als Dauermagnete in einem Ringscheibenbereich ausgebildet.

Die Permanentmagnetmittel liegen in der Regel direkt oder indirekt sowohl an Abschnitten des T-förmigen Teils als auch an Abschnitten des L-förmigen Teils an und sind beispielsweise angeklebt oder angelötet. Die Permanentmagnetmittel können auf diese Weise zur festen Verbindung des T-förmigen und des L-förmigen Teils dienen, womit auf zusätzliche Verbindungsmittel zum Beispiel Schraubmittel verzichtet werden kann. Außerdem sind die Permanentmagnetmittel damit besonders gut in der Dauermagnetanordnung flächig ohne Luftspalt fixiert, was im Hinblick auf die Ausbildung der Magnetflusslinien positiv ist.

Besonders vorteilhaft ist es, dass das T-förmige Teil und das L-förmige Teil bis auf die dazwischen liegenden Permanentmagnetmittel magnetisch entkoppelt sind. Ein magnetischer Kurzschluss im Bereich der Permanentmagnetmittel ohne Magnetfluss durch die Stegabschnitte zum Reibabschnitt wird damit sicher vermieden. Der Magnetlinienverlauf kann vielmehr eine gewünschte optimale Anziehkraft durch die Permanentmagnetmittel auf den axial bewegbaren Reibabschnitt ermöglichen. Gegebenenfalls sind magnetisch isolierende Zwischenelemente zwischen dem T-förmigen Teil und dem L-förmigen Teil zur Beeinflussung der Ausbildung der Magnetflusslinien vorzusehen.

In einer weiteren bevorzugten Ausführungsform des Erfindungsgegenstandes sind die Permanentmagnetmittel an dem T-förmigen Teil auf einer dem Mittelteil entgegen gesetzten Seite an dem Querteil positioniert. Damit können die Permanentmagnetmittel an einer flächigen bzw. durchgehend ausgebildeten Seite des T-förmigen Teils angebracht werden.

Bevorzugt sind die Permanentmagnetmittel in einem Ringscheibenbereich ausgebildet. Damit kann die Reibschaltkupplung kompakt und zur Achse konzentrisch bzw. diese umschließend ausgebildet werden. Ein in einem Ringscheibenbereich untergebrachter Permanentmagnetmittelteil, der zum Beispiel einen ringscheibenförmigen Permanentmagneten umfassen kann, ist im Hinblick auf die Dicke der Ringscheibe bzw. auf die flächige Abmessung problemlos auf eine gewünschte Ausgestaltung abstimmbar.

Vorteilhafterweise erstrecken sich die Permanentmagnetmittel in radialer Richtung zur Achse betrachtet über zumindest wesentliche Bereiche der radialen Abmessung des Spulenkörpers. Somit kann zum einen effektiv eine hohe Anziehkraft auf den axial bewegbaren Reibabschnitt erreicht werden und außerdem durch Bestromung des Spulenkörpers die Aufhebung der Anziehwirkung der Permanentmagnetmittel auf den Reibabschnitt kompensiert bzw. aufgehoben werden. Erfindungsgemäß wird eine gegenseitig abgestimmte Positionierung der Permanentmagnetmittel und der Magnetleitmittel relativ zum Spulenkörper ermöglicht, so dass eine optimale Ausbildung der Magnetflusslinien der Permanentmagnetmittel bei nicht bestromtem Elektromagneten der Elektromagnetanordnung erfolgt und eine ideale Auslöschung bzw. Kompensation der Magnetflusslinien der Permanentmagnetmittel bei Bestromung des Elektromagneten, derart, dass der Reibabschnitt sicher vom Rotor getrennt wird.

Die Permanentmagnetmittel können sich insbesondere radial nach außen über den radial außenliegenden Stegabschnitt erstrecken, da dort in der Regel ein größerer Raum für die Unterbringung der Permanentmagnetmittel vorhanden ist, als radial innenliegend zum Spulenkörper, wo insbesondere die Lagerung des Rotors bzw. anderer Elemente Bauraum benötigt.

Schließlich wird weiter vorgeschlagen, dass der Rotor als Riemenscheibe mit einer Riemenauflage ausgebildet ist, wobei der Spulenkörper, die Stegabschnitte und die Permanentmagnetmittel innerhalb der axialen Erstreckung der Riemenauflage angeordnet sind. Zur Begrenzung des Raumbedarfs in axialer Richtung ist es daher vorteilhaft, z.B. in radialer Richtung zwischen der Riemenauflage und z.B. Lagermitteln die Reibschaltkupplung mit den entsprechenden Teilen unterzubringen.

### Figurenbeschreibung

Anhand der einzigen Figur, welche eine Schnittdarstellung durch einen Teil einer erfindungsgemäßen Reibschaltkupplung zeigt, werden weitere Vorteile und Merkmale der Erfindung erläutert.

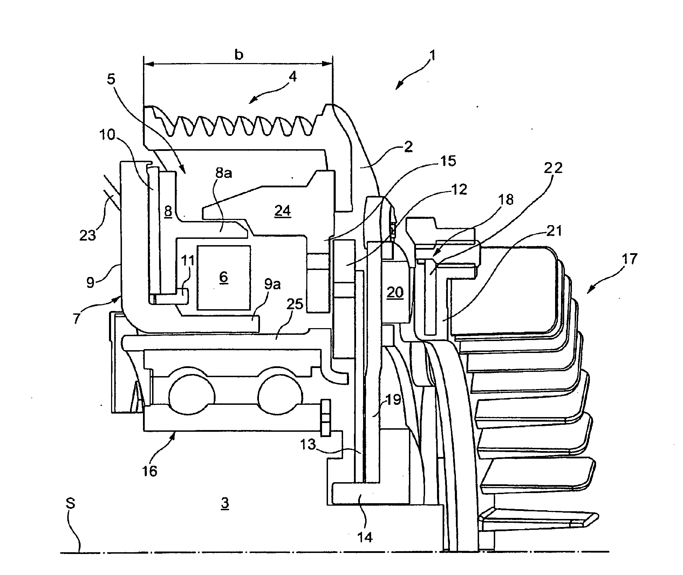

Figur 1 zeigt einen Querschnitt durch einen perspektivisch dargestellten Teil einer Anordnung zur Übertragung einer rotatorischen Bewegung mit einem durch eine Verbrennungskraftmaschine angetriebenen Rotor.

Hierfür ist eine Reibschaltkupplung 1 mit einem drehangetriebenen Rotor 2 zum Antrieb einer Welle 3 vorgesehen. Der Rotor 2 ist hier beispielsweise als Riemenrad mit einer Riemenauflage 4 für einen Mehrfachkeilriemen (nicht gezeigt) ausgestaltet. Die Riemenauflage 4 weist eine axiale Erstreckung b zur Achse S auf. Radial weiter innen zur Riemenauflage 4 ist eine Elektromagnetanordnung 5 in Fail-Safe Ausführung bzw. mit Ausfallsicherung untergebracht. Die schematisiert gezeigte Elektromagnetanordnung 5 umfasst eine Spule 6, welche zumindest teilweise von Magnetleitmitteln 7 umgeben ist. Die Magnetleitmittel 7 umfassen gemäß Figur 1 ein im Querschnitt T-förmiges Teil 8 und ein im Querschnitt L-förmiges Teil 9. In einem radial nach außen gerichteten Spaltbereich zwischen den Teilen 8 und 9 sind Dauermagnete 10 untergebracht. Über die Dauermagnete 10 kann die Verbindung und der Zusammenhalt des T-förmigen Teils 8 und des L-förmigen Teils 9 realisiert sein. Zwischen dem Teil 8 und dem Teil 9 ist radial innen benachbart zu den Dauermagneten 10 ein Zwischenringelement 11 zur magnetischen Trennung bzw. Entkopplung der beiden ferromagnetischen Teile 8 und 9 vorhanden.

Als axial bewegbarer Reibabschnitt der Reibschaltkupplung 1 ist ein Ankerelement 12 über eine Ankerfeder 13 an einer drehfest mit der Welle 3 verbundenen Hülse 14 befestigt. Das Ankerelement 12 ist ebenfalls aus einem ferromagnetischen Material und wird durch die magnetische Wirkung der Dauermagnete 10 reibschlüssig an einen Reibabschnitt 15 des Rotors 2 für eine kraftschlüssige Verbindung zwischen dem Ankerelement 12 in dem Reibabschnitt 15 angezogen. In diesem Zustand wird die volle Umdrehungszahl des Rotors 2 über den Reibabschnitt 15, das Ankerelement 12, die Ankerfeder 13 und die Hülse 14 auf die Welle 3 übertragen.

Die Elektromagnetanordnung 5 ist fest z.B. an einem Gehäuseabschnitt befestigt. Dies kann zum Beispiel das Wasserpumpengehäuse einer Kühlwasserpumpe sein, wenn die Reibschaltkupplung 1 über die Welle 3 zum Antrieb einer Wasserpumpe dient, Die Stegabschnitte 8a und 9a sind über einen Spalt zu benachbarten Stegen 24 und 25 des Rotors 2 beabstandet. Der Rotor 2 ist über den radial inneren Steg 25 über ein Kugellager 16 drehbar auf der Welle 3 gelagert. Mit dem Rotor drehfest verbunden ist ein Rippenrad 17, das über eine Wirbelstromkupplung 18 die Welle 3 mit einer geringeren als die Antriebsdrehzahl des Rotors 2 in Drehbewegung versetzt, wenn das Ankerelement 12 nicht mit dem Rotor 2 drehfest verbunden ist.

An einem Flansch 19, der ebenfalls an der Hülse 14 fest angebracht ist, sind Permanentmagnete 20 konzentrisch zur Achse S mit wechselnder Polarität angebracht und über einen Spalt beabstandet zu einem Ringabschnitt 21 des Rippenrads 17. Im Ringabschnitt 21, der beispielsweise aus Aluminium gebildet ist, ist ein Stahlring 22 eingegossen, wodurch bei vom Reibabschnitt 15 getrennten Ankerelement 12 das Rippenrad 17, welches mit der Rotordrehzahl rotiert, über die Wirbelstromkupplung 18 eine Schleppdrehzahl auf die Welle 3 überträgt.

Wesentlich für die erhöhte Drehmomentübertragungen zwischen Rotor 2 und Welle 3 im Zustand des Vollantriebs bei angezogenem Ankerelement 12 an den Reibabschnitt 15 ist eine erhöhte Anzugskraft des Ankerelements 12 durch die Dauermagnete 10. Hierzu ist das Teil 8 T-förmig ausgebildet, so dass am Teil 8 die Dauermagnete 10 in radialer Richtung sich nahezu über die gesamte Spule 6 und radial weiter nach außen bis unterhalb der Riemenauflage 4 erstrecken. Damit kann eine vergleichsweise größere wirksame Fläche der Dauermagnete 10 erreicht werden, wodurch auch eine höhere axiale magnetische Anziehkraft auf das Ankerelement 12 wirkt.

Die Dauermagnete 10 werden in einer direkten Anordnung in Flussrichtung der Magnetlinien in den Stegabschnitten 8a und 9a angeordnet, wodurch der von den Dauermagneten 10 ausgehende Magnetfluss verstärkt wird.

Für eine elektromagnetisch bewirkte Inaktivierung bzw. Kompensation der Magnetwirkung der Dauermagnete 10 sind diese vorteilhaft so auf die Teile 8 und 9 und die Spule 6 abgestimmt positioniert, dass bei Bestromung der Spule 6 beispielsweise über ein Kabel 23 die durch die Dauermagnete 10 bewirkte Anziehwirkung auf das Ankerelement 12 durch ein gegenwirkendes Spulen-Magnetfeld kompensiert bzw. sicher aufgehoben wird.

Vorteilhaft sind die Dauermagnete 10 bis radial außerhalb der Spule 6 gezogen, womit durch die größere Kreisringfläche der Dauermagnete 10 eine höhere dauermagnetische Anziehwirkung erreicht wird.

Zur Weiterführung der Magnetflusslinien der Dauermagnete 10 von den Stegabschitten 8a und 9a hin zum Ankerelement 12 im Anziehzustand bei nicht bestromter Spule 6, ist der Reibabschnitt 15 mit axial zu den Stegabschnitten 8a und 9a gerichteten Stegen 24 und 25 versehen. Die Stege 24 bzw. 25 sind radial getrennt durch einen geringen Luftspalt und axial überlappend zu den Stegabschnitten 8a bzw. 9a.

### Bezugszeichenliste:

- 1: Reibschaltkupplung
- 2: Rotor
- 3: Welle
- 4: Riemenauflage
- 5: Elektromagnetanordnung
- 6: Spule
- 7: Magnetleitmittel
- 8: T-Teil
- 8a: Stegabschnitt
- 9: L-Teil
- 9a: Stegabschnitt
- 10: Dauermagnet
- 11: Zwischenringelement
- 12: Ankerelement
- 13: Ankerfeder
- 14: Hülse
- 15: Reibabschnitt
- 16: Kugellager
- 17: Rippenrad
- 18: Wirbelstromkupplung
- 19: Flansch
- 20: Permanentmagnet
- 21: Ringabschnitt
- 22: Stahlring
- 23: Kabel
- 24: Steg
- 25: Steg

## Patentansprüche

1. Reibschaltkupplung (1) für eine Drehmomentübertragung von einem um eine Achse S antreibbaren Rotor (2) auf ein anzutreibendes Element (3), umfassend eine Reibscheibenkupplung mit einer Elektromagnetanordnung (5), die einen Spulenkörper (6) und den Spulenkörper zumindest teilweise umgebende ferromagnetisch leitende Magnetleitmittel (8, 9) aufweist welche einen zur Achse S radial außenliegenden (8a) und einen radial innenliegenden (9a) axial ausgerichteten Stegabschnitt und benachbart zu den Magnetleitmitteln vorhandene Permanentmagnetmittel (10) umfassen, über welche ein axial bewegbarer Reibabschnitt (12) der Reibscheibenkupplung magnetisch mit dem Rotor (2) verbindbar ist, wobei im elektrisch geschalteten Zustand der Elektromagnetanordnung (5) durch Schwächung der magnetischen Anziehwirkung der Permanentmagnetmittel (10) die Anlage des Reibabschnitts (12) am Rotor (2) aufhebbar ist, wobei die Permanentmagnetmittel (10) derart ausgebildet sind, dass sich ein Anteil der Permanentmagnetmittel (10) in radialer Richtung zur Achse S weiter nach außen als der radial außenliegende axial ausgerichtete Stegabschnitt (8a) erstreckt und/oder weiter nach innen als der radial innenliegende Stegabschnitt (9a) erstreckt, **dadurch gekennzeichnet, dass** die Magnetleitmittel ein im Querschnitt T-förmiges Teil (8) mit einem Mittelteil und ein abgewinkelt zum Mittelteil ausgerichtetes Querteil aufweisen, wobei der radial außenliegende axial ausgerichtete Stegabschnitt (8a) mit dem Mittelteil gebildet ist.

2. Reibschaltkupplung (1) nach Anspruch 1, **dadurch gekennzeichnet, dass** die Magnetleitmittel ein im Querschnitt L-förmiges Teil (9) mit zwei zueinander abgewinkelten Schenkeln aufweist, wobei der radial innenliegende Stegabschnitt (9a) mit einem der Schenkel gebildet ist.

3. Reibschaltkupplung (1) nach Anspruch 2, **dadurch gekennzeichnet, dass** ein Abschnitt des T-förmigen Teils (8) und ein Abschnitt des L-förmigen Teils (9) sich derart gegenüberliegen, dass entlang des Querteils des T-förmigen Teils (8) ein radial ausgerichteter Spalt vorhanden ist, in dem die Permanentmagnetmittel (10) angeordnet sind.

4. Reibschaltkupplung (1) nach einem der Ansprüche 2 oder 3, **dadurch gekennzeichnet, dass** das T-förmige Teil (8) und das L-förmige Teil (9) bis auf die dazwischen liegenden Permanentmagnetmittel (10) magnetisch entkoppelt sind.

5. Reibschaltkupplung (1) nach einem der vorhergehenden Ansprüche, **dadurch gekennzeichnet, dass** die Permanentmagnetmittel (10) an dem T-förmigen Teil (8) auf einer dem Mittelteil entgegengesetzten Seite an dem Querteil positioniert sind.

6. Reibschaltkupplung (1) nach einem der vorhergehenden Ansprüche, **dadurch gekennzeichnet, dass** die Permanentmagnetmittel (10) in einem Ringscheibenbereich ausgebildet sind.

7. Reibschaltkupplung (1) nach einem der vorhergehenden Ansprüche, **dadurch gekennzeichnet, dass** die Permanentmagnetmittel (10) in radialer Richtung zur Achse betrachtet, sich über zumindest einen Bereich der radialen Abmessung des Spulenkörpers (6) erstrecken.

8. Reibschaltkupplung (1) nach einem der vorhergehenden Ansprüche, **dadurch gekennzeichnet, dass** die Permanentmagnetmittel (10) in radialer Richtung zur Achse S betrachtet, sich außen und/oder innen über den Spulenkörper (6) hinaus erstrecken.

9. Reibschaltkupplung (1) nach einem der vorhergehenden Ansprüche, **dadurch gekennzeichnet, dass** der Rotor (2) als Riemenscheibe mit einer Riemenauflage (4) ausgebildet ist, wobei der Spulenkörper (6), die Stegabschnitte (8a, 9a) und die Permanentmagnetmittel (10) innerhalb der axialen Erstreckung der Riemenauflage (4) angeordnet sind.

## Claims

1. Friction clutch (1) for transmitting torque from a rotor (2), which can be driven about an axis S, to an element (3) which is to be driven, comprising a friction disk clutch having an electromagnet arrangement (5) which comprises a coil former (6) and ferromagnetically conductive magnetic conducting means (8, 9) which at least partially surround the coil former and which comprise a web section (8a) lying radially on the outside with respect to the axis S and a web section (9a) lying radially on the inside with respect to the axis S and oriented axially, and permanent magnet means (10) provided adjacent to the magnetic conducting means, via which permanent magnet means an axially movable friction section (12) of the friction disk clutch can be magnetically connected to the rotor (2), wherein in the electrically switched on state of the electromagnet arrangement (5), the bearing of the friction section (12) against the rotor (2) can be eliminated by attenuating the magnetic attraction effect of the permanent magnet means (10), wherein the permanent magnet means (10) are embodied in such a way that a portion of the permanent magnet means (10) extends further outward in radial direction with respect to the axis S than the radially outerlying axially oriented web section (8a) and/or extends further inwards than the web section (9a) lying radially on the inside, **characterised in that** the magnet conductive means have a part (8) which is T-shaped in cross section with a central part, and a transverse part which is oriented at an angle with respect to the central part, wherein the axially oriented web section (8a) lying radially on the outside is formed with the central part.

2. Friction clutch (1) according to claim 1, **characterised in that** the magnetic conducting means have a part (9) which is L-shaped in cross section with two limbs which are at an angle to one another, wherein the radially inner web section (9a) is formed by one of the limbs.

3. Friction clutch (1) according to claim 2, **characterised in that** a section of the T-shaped part (8) and a section of the L-shaped part (9) lie opposite one another in such a way that a radially oriented gap, in which the permanent magnet means (10) are arranged, is provided along the transverse part of the T-shaped part (8).

4. Friction clutch (1) according to one of claims 2 or 3, **characterised in that** the T-shaped part (8) and the L-shaped part (9) are magnetically decoupled except for the permanent magnet means (10) located between them.

5. Friction clutch (1) according to one of the preceding claims, **characterised in that** the permanent magnet means (10) are positioned at the T-shaped part (8) on a side on the transverse part lying opposite the central part.

6. Friction clutch (1) according to one of the preceding claims, **characterised in that** the permanent magnet means (10) are formed in an annular disk region.

7. Friction clutch (1) according to one of the preceding claims, **characterised in that** the permanent magnet means (10) extend, as viewed in radial direction to the axis, over at least a part of the radial dimension of the coil former (6).

8. Friction clutch (1) according to one of the preceding claims, **characterised in that** the permanent magnet means (10) extend, as viewed in radial direction relative to the axis S, outwardly and/or inwardly beyond the coil former (6).

9. Friction clutch (1) according to one of the preceding claims, **characterised in that** the rotor (2) is configured as a belt pulley with a belt support (4), wherein the coil former (6), the web sections (8a, 9a) and the permanent magnet means (10) are arranged inside the axial extension of the belt support (4).

## Revendications

1. Embrayage à friction (1) pour transmettre un couple d'un rotor (2) pouvant être entraîné autour d'un axe S à un élément (3) à entraîner, comprenant un embrayage à disque de friction pourvu d'une unité d'électroaimants (5), laquelle comprend un corps de bobine (6) et des moyens de conduction magnétique (8, 9) conducteurs de manière ferromagnétique et entourant au moins en partie le corps de bobine, lesquels moyens de conduction magnétique comprennent une section d'âme orientée axialement et située radialement par rapport à l'axe S à l'extérieur (8a), et une section d'âme orientée axialement et située radialement à l'intérieur (9a), et des moyens d'aimants permanents (10) disposés au voisinage des moyens de conduction magnétique et par l'intermédiaire desquels une section de friction (12) axialement mobile de l'embrayage à disque de friction peut être reliée magnétiquement au rotor (2), l'appui de la section de friction (12) sur le rotor (2) pouvant être supprimé, à l'état de commutation électrique de l'unité d'électroaimants (5), par atténuation de l'action d'attraction magnétique des moyens d'aimants permanents (10), les moyens d'aimants permanents (10) étant réalisés de telle manière qu'une partie des moyens d'aimants permanents (10) s'étend dans la direction radiale par rapport à l'axe S davantage vers l'extérieur que la section d'âme orientée axialement et située radialement à l'extérieur (8a) et/ou davantage vers l'intérieur que la section d'âme située radialement à l'intérieur (9a), **caractérisé en ce que** les moyens de conduction magnétique comprennent une partie (8) de section transversale en forme de T pourvue d'une partie centrale et d'une partie transversale disposée en formant un angle par rapport à la partie centrale, la section d'âme (8a) orientée axialement et située radialement à l'extérieur étant formée par la partie centrale.

2. Embrayage à friction (1) selon la revendication 1, **caractérisé en ce que** les moyens de conduction magnétique comprennent une partie (9) de section transversale en forme de L pourvue de deux branches formant un angle l'une par rapport à l'autre, la section d'âme (9a) située radialement à l'intérieur étant formée par l'une des branches.

3. Embrayage à friction (1) selon la revendication 2, **caractérisé en ce qu'**une section de la partie en forme de T (8) et une section de la partie en forme de L (9) se font face de telle manière qu'une fente orientée radialement est ménagée le long de la partie transversale de la partie en forme de T (8), fente dans laquelle sont disposés les moyens d'aimants permanents (10).

4. Embrayage à friction (1) selon l'une des revendications 2 ou 3, **caractérisé en ce que** la partie en forme de T (8) et la partie en forme de L (9) sont découplées magnétiquement, à l'exception des moyens d'aimants permanents (10) situés entre celles-ci.

5. Embrayage à friction (1) selon l'une des revendications précédentes, **caractérisé en ce que** les moyens d'aimants permanents (10) sur la partie en forme de T (8) sont positionnés sur la partie transversale, sur une face opposée à la partie centrale.

6. Embrayage à friction (1) selon l'une des revendications précédentes, **caractérisé en ce que** les moyens d'aimants permanents (10) sont formés dans une zone de disque annulaire.

7. Embrayage à friction (1) selon l'une des revendications précédentes, **caractérisé en ce que** les moyens d'aimants permanents (10), observés dans la direction radiale par rapport à l'axe, s'étendent sur au moins une partie de l'étendue radiale du corps de bobine (6).

8. Embrayage à friction (1) selon l'une des revendications précédentes, **caractérisé en ce que** les moyens d'aimants permanents (10), observés dans la direction radiale par rapport à l'axe S, s'étendent à l'extérieur et/ou à l'intérieur au-delà du corps de bobine (6).

9. Embrayage à friction (1) selon l'une des revendications précédentes, **caractérisé en ce que** le rotor (2) est réalisé sous la forme d'une poulie à courroie pourvue d'un support de courroie (4), le corps de bobine (6), les sections d'âme (8a, 9a) et les moyens d'aimants permanents (10) étant disposés à l'intérieur de l'étendue axiale du support de courroie (4).
